# EUROPEAN PATENT APPLICATION

(11) **EP 0 992 993 A1**
(43) Date of publication of application: **12.04.2000**
(21) Application number: 99914776.2
(22) Date of filing: 20.04.1999
(51) Int. Cl.: G11B 20/10, H04N 5/782, H04N 5/85

(54) **AUDIOVISUAL DATA RECORDING / REPRODUCING SYSTEM**

(30) Priority: 22.04.1998 JP 11215998
(71) Applicant: MATSUSHITA ELECTRIC INDUSTRIAL CO., LTD., Kadoma-shi, Osaka 571-8501 (JP)
(72) Inventor: AYAKI, Yasushi, Neyagawa-shi, Osaka 572-0037 (JP)
(74) Representative: Grünecker, Kinkeldey, Stockmair & Schwanhäusser Anwaltssozietät
(86) International application number: JP9902096
(87) International publication number: WO9954877

(57) **Abstract**

There are provided receiving means for receiving an instruction from a controller, setting means for reading command-receiving information, data-inputting/outputting information, buffer-controlling information, data-write-controlling information, and data-read-controlling information for the type of storage unit corresponding to the instruction from a memory storing the above types of information and setting the above types of information to each register, and processing means for performing control in accordance with the content of each register.

## Description

### Technical Field

The present invention relates to an audiovisual-data recording/reproducing apparatus in a system in which a plurality of audiovisual units are connected on a bus.

### Background Art

A conventional audiovisual-data recording/reproducing apparatus will be described below by referring to the accompanying drawings.

The standard for interfaces for handling digital audiovisual data has been recently established. Moreover, an audiovisual unit corresponding to the standard has been developed and a plurality of audiovisual units have been connected on a bus. A storage unit having a large overhead according to a mechanical operation such as a tape unit, optical disk unit, or changer unit may be connected on a bus. In such a case, for example, by setting an HDD (hard disk drive) in a storage unit having a large overhead as disclosed in Japanese Patent Laid-Open No. 9-139009, it is possible to absorb the overhead of a mechanical operation.

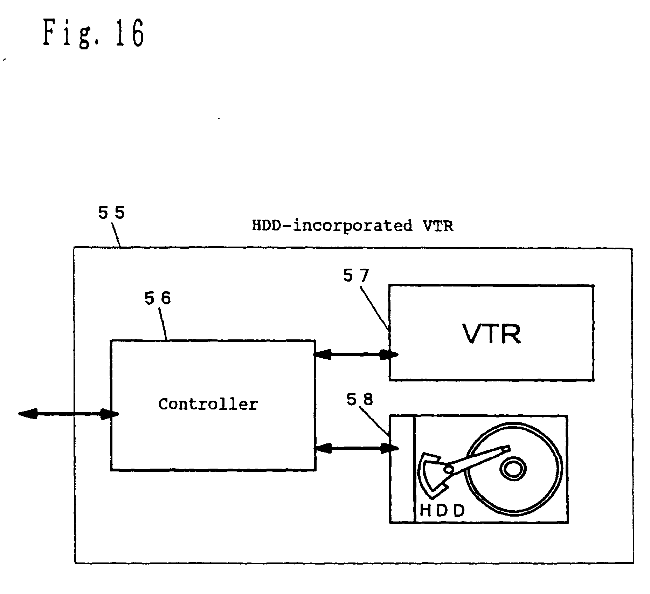

Figure 16 shows a conventional HDD-incorporated VTR.

An HDD-incorporated VTR 55 is provided with a controller 56, a VTR 57, and an HDD 58. The controller 56 is means for controlling the VTR 57 and HDD 58. The VTR 57 is an apparatus for recording/reproducing audiovisual data. The HDD 58 is recording/reproducing means for absorbing the overhead of a mechanical operation.

Next, operations of the conventional HDD-incorporated VTR having the above configuration will be described below.

First, when the controller 56 receives an instruction for start of recording, the controller 56 transmits a recording start command to the VTR 57 and HDD 58 in accordance with the instruction. The VTR 57 starts recording audiovisual data in a magnetic tape and the HDD 58 starts recording audiovisual data in a magnetic disk respectively. The HDD 58 can instantaneously start recording audiovisual data but the VTR 57 takes a lot of time before actually starting recording due to the overhead of a mechanical operation. By recording audiovisual data in the HDD 58 until the VTR 57 is ready for recording, it is possible to absorb the overhead of a mechanical operation and instantaneously start recording.

Moreover, even while the VTR 57 performs video recording, it is possible to instantaneously reproduce the audiovisual data recorded in the HDD 58.

Thus, by setting an HDD in a storage unit such as a VTR as a temporary memory, it is possible to absorb the overhead of a mechanical operation and moreover, instantaneously perform reproduction even while these units perform recording.

However, by setting an HDD in each storage unit like the above conventional example, the cost increases because an HDD and a control circuit are necessary for each unit. Moreover, because an HDD operates only when it is used, the availability efficiency is low. Moreover, even if the HDD technique advances and thereby, a large-capacity high-speed HDD appears, replacement with a new HDD is difficult.

Furthermore, because the temporary storage method depends on a storage unit for performing temporary storage, a temporary storage method for a built-in HDD specified for a specific storage unit cannot correspond to various temporary-storage methods.

### Disclosure of the Invention

Considering the problems of the above conventional HDD-incorporated VTR that the cost increases because a control circuit and an HDD are necessary for each unit and the availability efficiency is low, replacement with a new HDD is not easy, and it is impossible to correspond to various temporary-storage methods, the object of the present invention is to provide an audiovisual-data recording/reproducing apparatus having low cost and good availability efficiency and capable of corresponding to various temporary-storage methods.

To solve the above problems, the first aspect of the present invention uses an audiovisual-data recording/reproducing apparatus comprising:
interface means for transferring data and commands to and from at least a controller and storage units connected on a bus;
data recording means for transferring data to and from the interface means and recording or reproducing the data; recording/reproducing-position control means for controlling the recording/reproducing position of the data recording means; and
recording/reproducing control means for transferring commands to and from the interface means, controlling the data recording means and the recording/reproducing-position control means, and executing the data temporary-storage operation; characterized in that
the recording/reproducing control means has at least the information showing types of the storage units, information for receiving commands corresponding to the types of the storage units, information for inputting/outputting data, information for controlling temporary storage, information for controlling data write in the types of the storage units, and information for controlling data read from the types of the storage units, and
the type of a storage unit serving as a temporary memory is specified in accordance with the command output from the controller showing a storage unit serving as a temporary memory to perform control in accordance with the command-receiving information data-inputting/outputting information, temporary-storage-controlling information, data-write-controlling information, and data-read-controlling information corresponding to specified types of storage units.

Moreover, the second aspect of the present invention uses an audiovisual-data recording/reproducing apparatus wherein
the recording/reproducing control means stores not only the various types of information but also stores correspondence information between the command-receiving information, data-inputting/outputting information, temporary-storage-controlling information, data-write-controlling information, data-read-controlling information, and the type of data to be recorded or reproduced.

Furthermore, the third aspect of the present invention uses an audiovisual-data recording/reproducing apparatus wherein the recording/reproducing control means is provided with setting means for setting the command-receiving information, data-inputting/outputting information, temporary-storage-controlling information, data-write-controlling information, and data-read-controlling information for the type of storage unit corresponding to the command received from the controller, to a predetermined register, and processing means for performing the control in accordance with the contents of the register.

Furthermore, the fourth aspect of the present invention uses an audiovisual-data recording/reproducing apparatus wherein a plurality of the registers are used and the processing means performs multitask processing.

Furthermore, the fifth aspect of the present invention uses an audiovisual-data recording/reproducing apparatus wherein the recording/reproducing control means has recording-state display means for displaying the recording state of the data storage means.

Furthermore, the sixth aspect of the present invention uses an audiovisual-data recording/reproducing apparatus having storage-unit-state display means for displaying the state of a storage unit instructed by the controller.

Furthermore, the seventh aspect of the present invention uses a medium storing a program for realizing functions of the audiovisual-data recording/reproducing apparatuses.

### Brief Description of the Drawings

Figure 1 is a block diagram of an audiovisual-data recording apparatus of the present invention;
Figure 2 is an illustration showing a case of connecting an audiovisual-data recording/reproducing apparatus of the present invention, other AV units, and a controller to a bus;
Figure 3 is a unit block diagram for an HDD to operate as a temporary memory when recording data from a tuner into a VTR in a first embodiment of the present invention;
Figure 4 is an illustration showing temporal exchanges of control commands and AV data between each unit when an HDD operates as a temporary memory when recording data supplied from a tuner into a VTR in the first embodiment of the present invention;
Figure 5 is a flow chart showing the flow of the processing of a video-recording setting command in the first embodiment of the present invention;
Figure 6 is a flow chart showing the flow of the processing until video recording is completed after the video recording is started by receiving a video-recording start command in the first and second embodiments of the present invention;
Figure 7 is a unit block diagram when an HDD records the data supplied from a tuner to be video-recorded in a VTR as a temporary memory while the VTR reproduces the data in the second embodiment of the present invention;
Figure 8 is an illustration showing temporal exchanges of control commands and AV data between each unit when an HDD records the data supplied from a tuner to be recorded in a VTR as a temporary memory while the VTR reproduces the data in the second embodiment of the present invention;
Figure 9 is a unit block diagram for an HDD to operate as a temporary memory when reproducing the data supplied from a VTR on a digital monitor in a third embodiment of the present invention;
Figure 10 is an illustration showing temporal exchanges of control commands and AV data between each unit for an HDD to operate as a temporary memory when reproducing the data supplied from a VTR on a digital monitor in the third embodiment of the present invention;
Figure 11 is a flow chart showing the flow of the processing of a reproducing setting command in the third embodiment of the present invention;
Figure 12 is a flow chart showing the flow of the processing of a reproduction start command until reproduction is stopped by a reproduction stop command after the reproduction is started by receiving a reproduction start command in the third embodiment of the present invention;
Figure 13 is a unit block diagram when an HDD operates as a temporary memory for two storage units in a fourth embodiment of the present invention;
Figure 14 is an illustration showing a specific example of recording-state display means in a fifth embodiment of the present invention;
Figure 15 is an illustration showing specific example of storage-unit-state display means in the fifth embodiment of the present invention;
Figure 16 is an illustration showing a conventional HDD-incorporated VTR;
Figure 17 is an illustration showing specific example of memories and registers of an HDD control circuit used for the first to fifth embodiments of the present invention; and
Figure 18 is a block diagram of an HDD control circuit used for the first to fifth embodiments of the present invention.

### Best Mode for Carrying Out the Invention

Embodiments of the present invention will be described below by referring to the accompanying drawings.

### 〈〈Embodiment 1〉〉

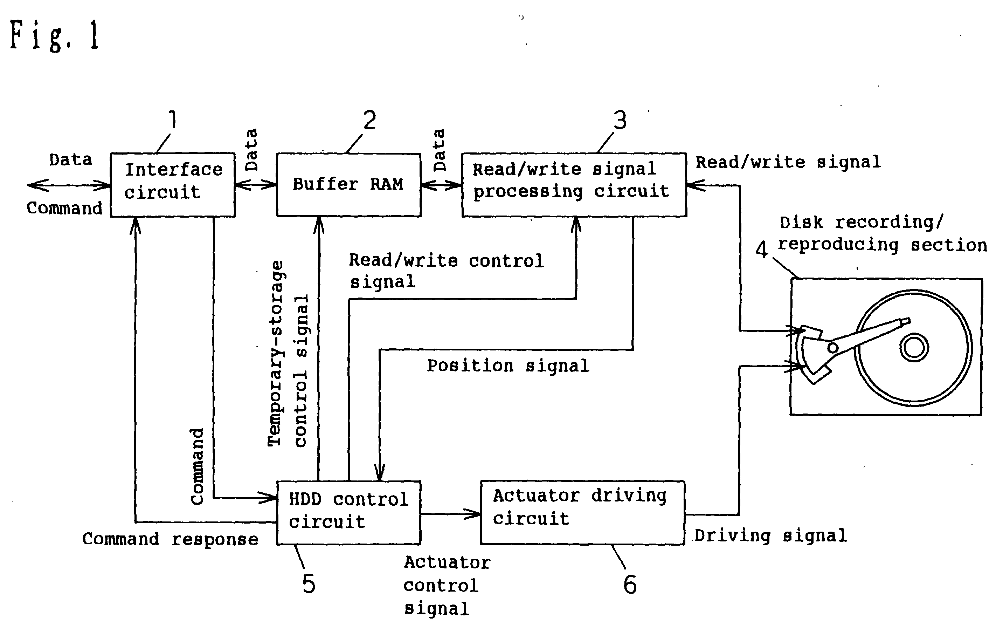

First, the first embodiment will be described below by referring to Figures 1 to 6 and Figures 17 and 18.

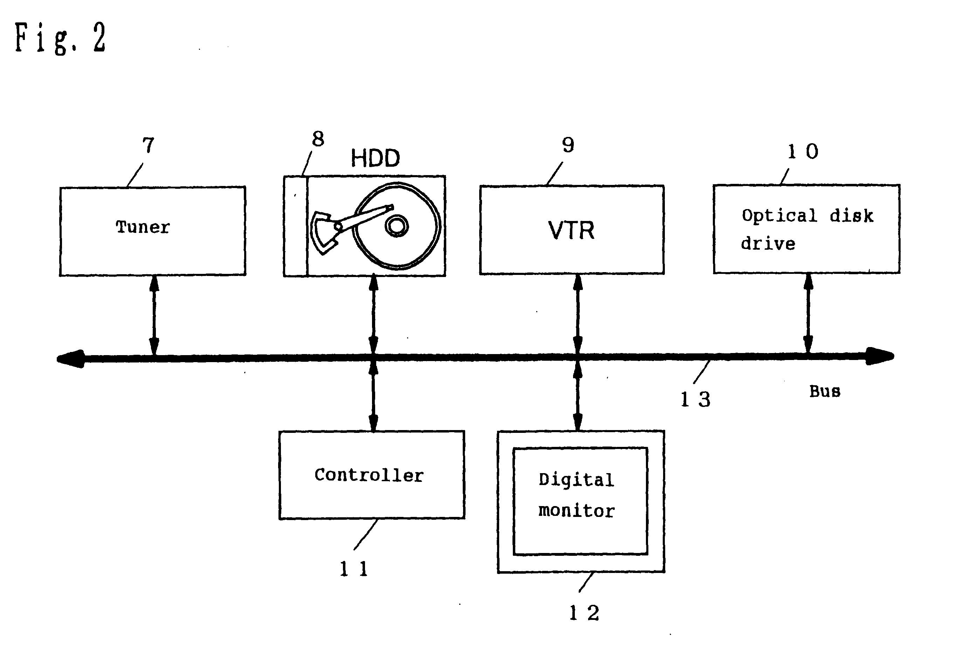

Figure 2 shows an example of audiovisual units connected on a bus. A tuner 7, an HDD 8, a VTR 9, an optical disk drive 10, a controller 11 and a digital monitor 12 are connected on a bus 13.

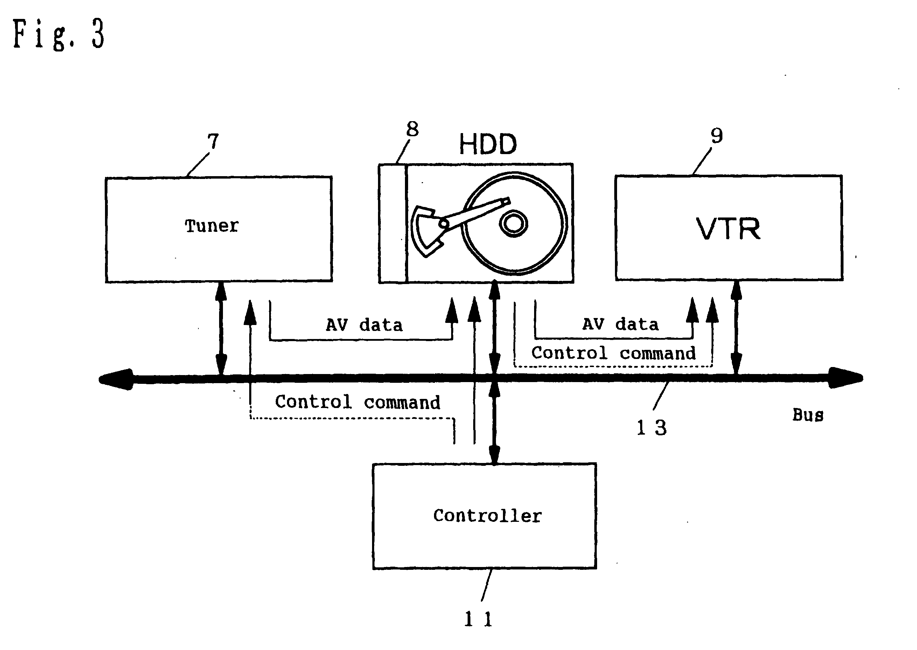

As for this embodiment, a case is described in which the HDD 8 operates as a temporary memory when recording the data supplied from the tuner 7 in the VTR 9 as shown in Figure 3. The controller 11, tuner 7, HDD 8, and VTR 9 are connected to the bus 13.

The HDD 8 serves as the audiovisual-data recording/reproducing apparatus of this embodiment.

Figure 1 shows a block diagram of the audiovisual-data recording/reproducing apparatus of this embodiment.

An interface circuit 1 is means for transmitting and receiving data and commands to and from the controller 11, the VTR 9, the optical disk drive 10, and the tuner 7 connected on the bus. A buffer RAM 2 is temporary storage means of data input/output through the interface circuit 1. A read/write-signal processing circuit 3 is means for converting the data input from the buffer RAM 2 into a write signal and coverts a write signal input from a disk recording/reproducing section 4 into data. The disk recording/reproducing section 4 is means for storing the data read or written by a read/write signal circuit 103. An actuator-driving circuit 6 is means for driving an actuator for moving a head in the disk recording/reproducing section 4. An HDD control circuit 5 is means for transmitting and receiving a command to and from the interface circuit 1 and controlling the buffer RAM 2, the read/write-signal processing circuit 3, and the actuator-driving circuit 6.

The buffer RAM 2, read/write-signal processing circuit 6, and disk recording/reproducing section 4 serve as an example of data recording means of the present invention, the disk recording/reproducing section 4 serves as an example of data storage means of the present invention, the interface circuit 1 serves as an example of interface means of the present invention, the actuator-driving circuit 6 serves as an example of recording/reproducing-position control means of the present invention, and the HDD control circuit 5 serves as an example of recording/reproducing control means of the present invention.

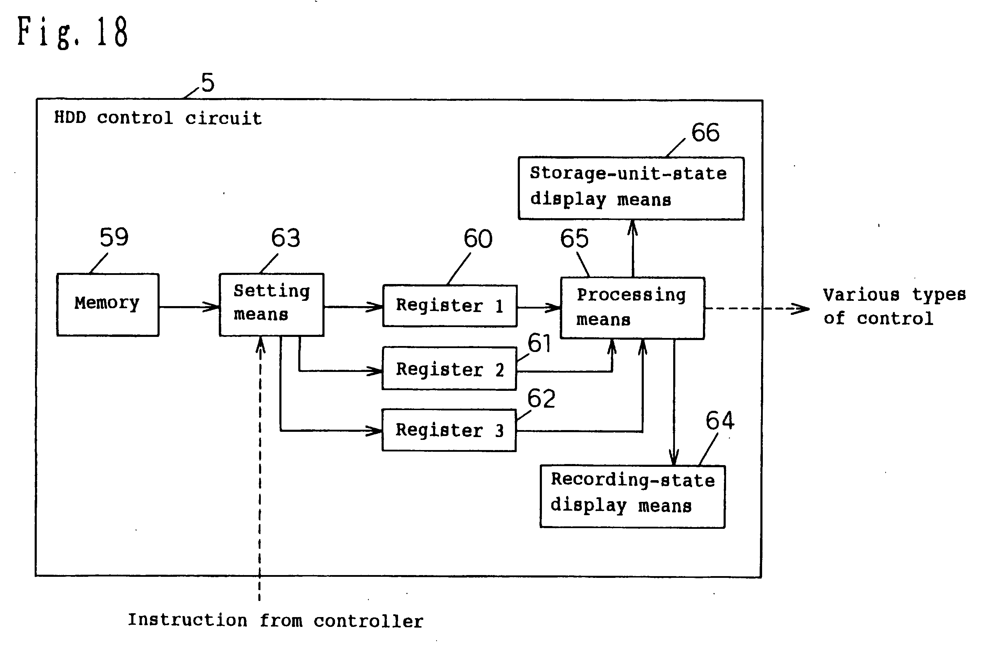

Moreover, the HDD control circuit 5 has the configuration shown in Figure 18. That is, in Figure 18, the HDD control circuit 5 serves as means for performing control, etc. by using a memory 59, setting means 63, a register-1 60, a register-2 61, and a register-3 62, and processing means 65.

The memory 59 is means storing the information for a control method of a unit different for each type of storage unit and each type of recording/reproducing data. The register-1 60, register-2 61, and register-3 62 are means storing some of the contents in the memory 59 to perform control in accordance with the contents. The setting means 63 is means for setting the information in the memory 59 to any one of the register-1 60, register-2 61, and register-3 62 in accordance with a command supplied from the controller. The processing means 65 is means for performing control in accordance with the contents in registers.

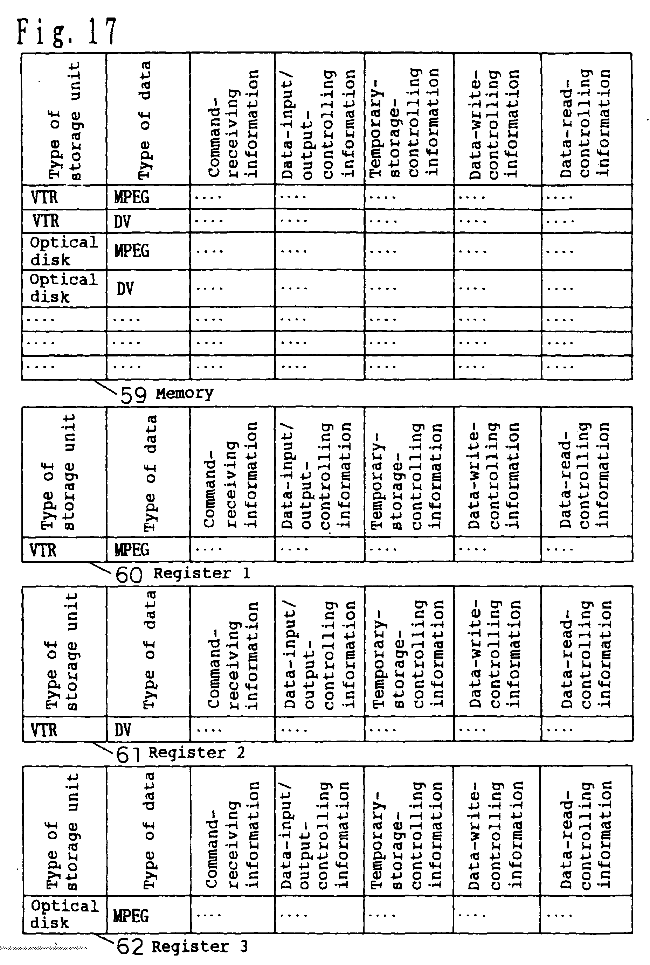

Figure 17 shows specific examples of the memory 59, register-1 60, register-2 61, and register-3 62. The memory 59 stores command-receiving information, data-input/output-controlling information, temporary-storage-controlling information, data-write-controlling information, and data-read-controlling information that are different for each type of storage unit and each type of data. For example, types of storage units include a VTR and an optical disk drive, etc. and types of data include the type of data such as MPEG data, DV data, or the like and the transfer rate of data.

The command-receiving information includes the information for a command set and a protocol to be received. Based on such information, the processing means 65 serves as means for executing command reception or command response. The data-input/output-controlling information includes the type of a data transmission protocol for input/output of data and version information, etc.. Based on such information, the processing means 65 serves as means for setting data-transmission-controlling information to the interface circuit 1. The temporary-storage-controlling information includes a temporary-recording-capacity value corresponding to a delay due to the mechanical operation of a storage unit, a method for recording the data to be recorded as cache data, and the data amount, and based on such information, the processing means 65 serves as means for controlling recording/reproducing. The data-write-controlling information includes the information for a command set, etc. used to write data into a storage unit and based on such information, the processing means 65 serves as means for issuing a command to a storage unit and executing data writing operation. Moreover, the data-write-controlling information includes the information for a command set, etc. used to read data out from a storage unit and based on such information, the processing means 65 serves as means for issuing a command to a storage unit and executing data reading operation.

Furthermore, the command-receiving information, data-input/output-controlling information, temporary-storage-controlling information, data-write-controlling information, and data-read-controlling information corresponding to the type of a storage unit and the type of data to be actually controlled stored in the memory 59 are set to the register-1 60, register-2 61, and register-3 62.

Next, operations of this embodiment will be described below.

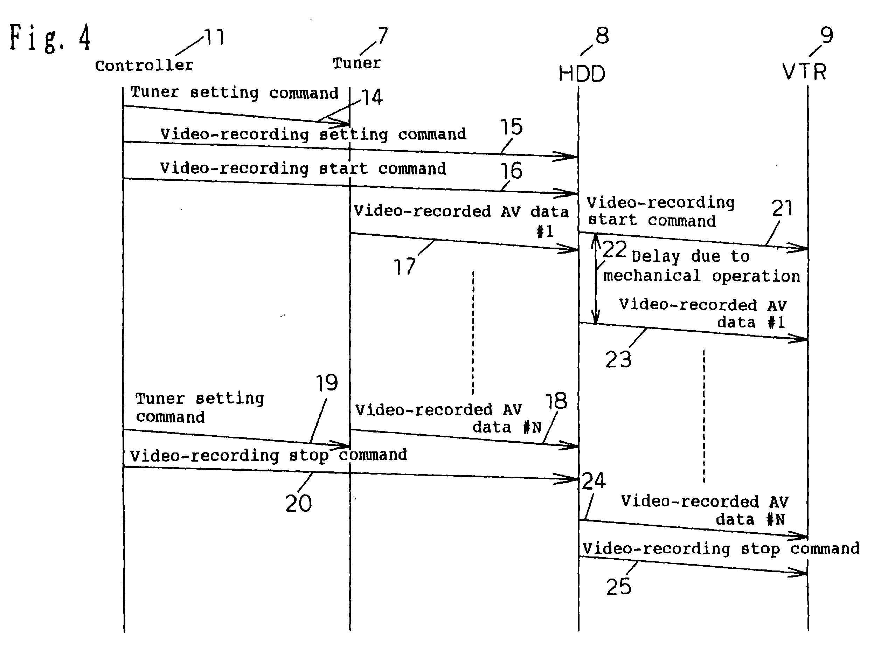

Figure 4 shows the temporal flow of commands and data. First, the controller 11 outputs a tuner-setting command 14 to the tuner 7. The tuner 7 receives the command to set the tuner 7. For example, the channel of a television program is selected, and the like. When setting of the tuner 7 is completed, the controller 11 outputs a video-recording setting command 15 to the HDD 8. Next, when setting of the video-recording setting command 15 is completed by the HDD 8, the controller outputs a video-recording start command 16 to the HDD 8. Then the HDD 8 outputs a video-recording start command 21 to the VTR 9. Immediately after outputting the command 21, the tuner 7 consecutively sends video-recorded AV data-#1 17 to video-recorded AV data-#N 18 to the HDD 8. In this case, N denotes a natural number. When the video-recording start command 21 is received, the VTR 9 starts preparation for video recording. However, because there is a delay 22 due to a mechanical operation, the VTR 9 cannot receive actual data until a predetermined time passes. Until then, data is recorded in the HDD 8. When the predetermined time passes and the delay 22 due to the mechanical operation is eliminated, the VTR 9 records video-recorded AV data-#1 23 to video-recorded AV data-#N 24. Thereafter, a tuner-setting command 19 is output to the tuner 7 from the controller 11. For example, a command for turning off the power supply of the tuner is output and the like. Immediately after that, a video-recording stop command 20 is output to the HDD 8 from a controller 409. The HDD 8 completes sending every video-recorded AV data stored in the HDD 8 itself to the VTR 9 and finally, transmits a video-recording stop command 25 to the VTR 9. The above-mentioned is the description of the temporal flow of commands and data.

Next, the processing performed by the HDD 8 to execute the above contents will be described below by referring to a flow chart. For convenience' sake, the processing of the video-recording setting command 15 and the subsequent processing will be described by two separate flow charts.

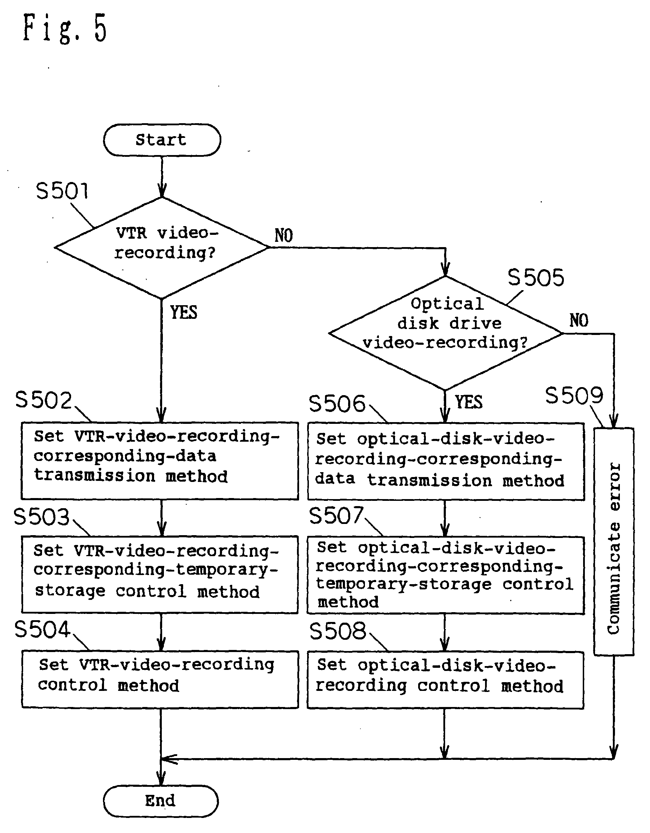

Figure 5 shows the processing performed by the HDD 8 when the video-recording setting command 15 is output. That is, the type of a storage unit is decided in accordance with the video-recording setting command 15 sent from the controller 11 (S501). Because recording is performed in a VTR from the tuner 7 in case of this embodiment, setting of a VTR-video-recording-corresponding-data transmission method is started (S502). Then, a VTR-video-recording-corresponding-temporary-storage control method is set (S503). Moreover, a VTR-video-recording control method is set (S504). The above processing represents that the information in the memory 59 is set to the register-1 60 by the setting means 63 in Figure 18.

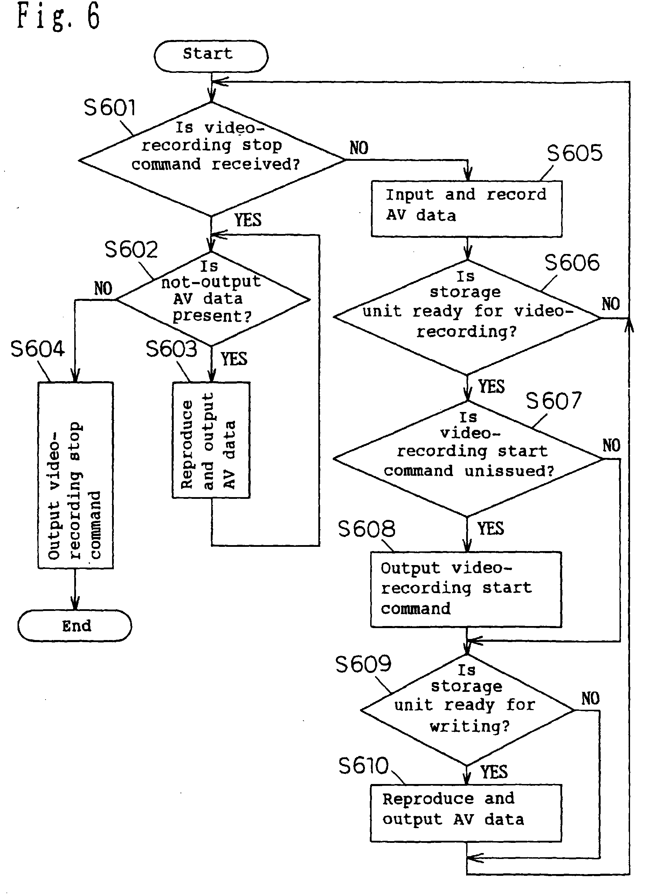

Figure 6 shows the processing performed by the HDD 8 until the VTR 9 receives the video-recording stop command 25 after the controller outputs a video-recording start command 16 to the HDD 8. That is, when receiving a video-recording start command 16 sent from the controller 11, whether a video-recording stop command is received (S601) is decided. Because this embodiment uses the video-recording start command 16, the processing shifts to receipt and recording of AV data from tuner 7 (S605). In this case, data is input from the tuner and recorded. When recording of data for one block is completed, the processing shifts to "Is storage unit ready for video-recording?" (S606). In case of this embodiment, it is assumed that the VTR 9 is used as a recorder and other data is not currently recorded or reproduced. Then, because the storage unit, that is, the VTR 9 is ready to record data, the processing shifts to "Video-recording start command unissued?" (S607). This embodiment does not issue any video-recording start command to the VTR 9 yet. Therefore, the processing shifts to "Output video-recording start command" (S608). In this case, the video-recording start command 21 is issued to the VTR 9 from the HDD 8. The VTR 9 receives the command 21 to start the preparation for recording data. That is, because of a mechanical delay, the VTR 9 cannot become immediately ready to record data. Then, it is decided whether the VTR 9 is actually ready to write data in the step of "Is storage unit ready to write data?" (S609). Because the VTR 9 is not ready to write data yet due to the mechanical delay, the processing shifts to "Is video-recording stop command received?" (S601). In this case, it is assumed that the video-recording stop command is not received from the controller 11 yet. Then, the processing shifts to "Input and record AV data" to record the data in the second block in the HDD 8. The processing shifts to "Is storage unit ready for video-recording?" (S606) again and the VTR 9 is ready to record data. Therefore, the processing shifts to "Is video-recording start command unissued?" (S607). Because the video-recording start command is already issued for the VTR 9 last time, the processing shifts to "Is storage unit ready for writing?" (S609), differently from the last time. However, because a write enable state is not set yet due to the mechanical delay of the VTR 9, the processing shifts to "Is video-recording stop command received?" (S601). The above operations are repeated and thereby, data is recorded in the HDD 8. When the VTR 9 becomes actually ready for writing after a predetermined time passes, the processing shifts to "Reproduce and output AV data" (S610) from "Is storage unit ready for writing?" (S609) and data recorded in the HDD 8 are consecutively written in the VTR 9 starting with the first data only for one block. Hereafter, the same processings are repeated to write data in the VTR 9. Then, when the video-recording stop command is received from the controller 11, the processing shifts to "Is not-output AV data present? (S602) from "Is video-recording stop command received?" (S601). Because not-output data is present, data is written in the VTR 9 from the HDD 8 for one block in the step of "Reproduce and output AV data" (S603). The above steps are repeated until non-output data runs out. When not-output data runs out in the step of "Is not-output data present?" (S602), the processing shifts to "Output video-recording stop command" (S604). In this case, the video-recording stop command 25 is sent to the VTR 9 from the HDD 8 and the processing is completed.

Thus, according to this embodiment, it is possible to instantaneously record data.

### 〈〈Embodiment 2〉〉

Then, the second embodiment will be described below by referring to Figures 6, 7, and 8.

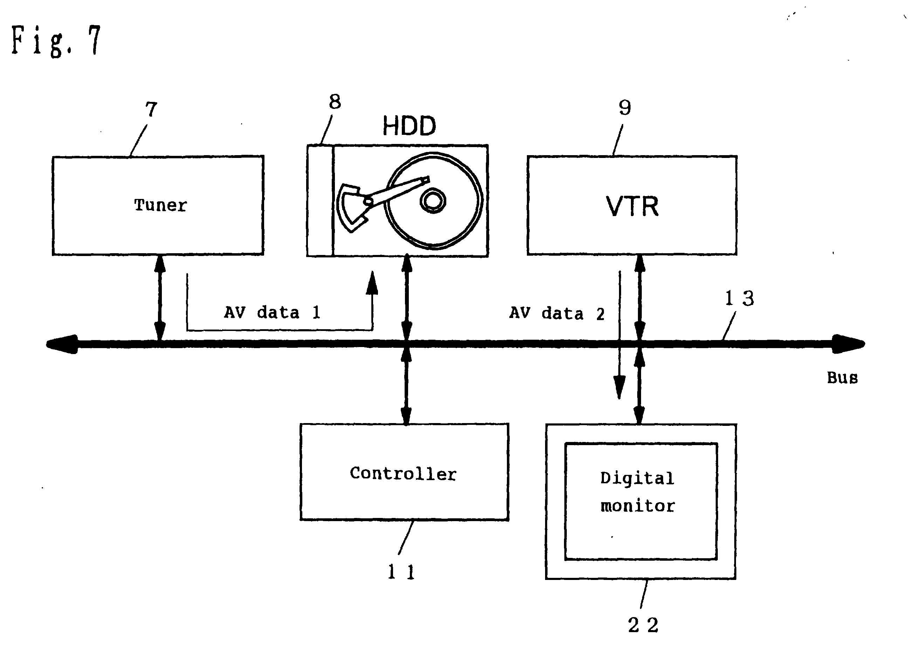

For this embodiment, a case is described in which an HDD 8 records the data supplied from a tuner to be video-recorded in a VTR 9 as a temporary memory while the VTR 9 performs reproduction as shown in Figure 7.

The audiovisual-data recording/reproducing apparatus of this embodiment is the same as that of the first embodiment, that is, the HDD 8. Moreover, the configuration of each audiovisual unit connected on a bus is the same except that a digital monitor 22 is added in Figure 7. That is, the apparatus is configured by a controller 11, a tuner 7, the HDD 8, and the VTR 9, and the newly-added digital monitor 22.

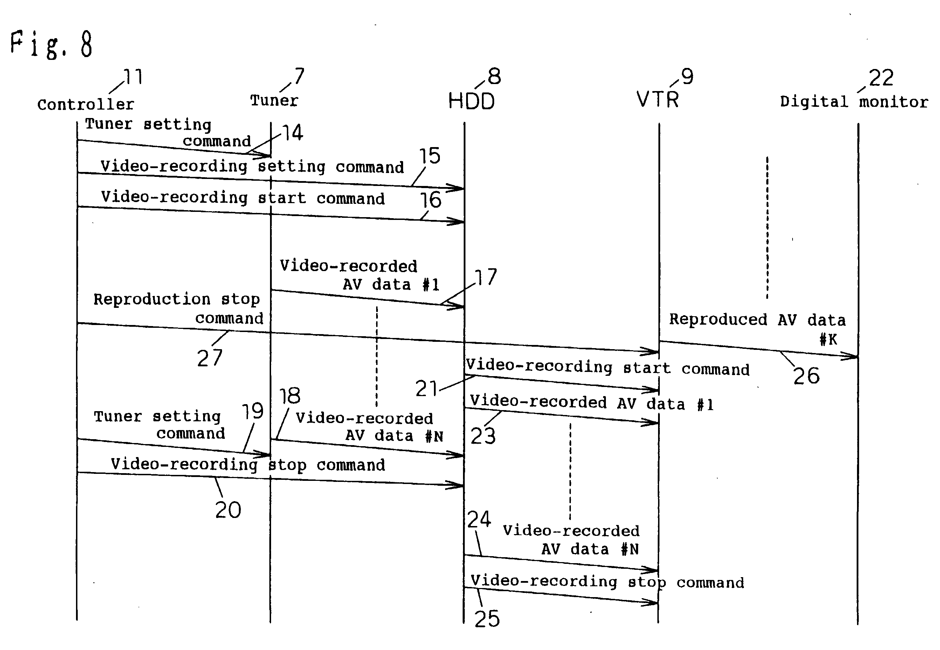

Figure 8 shows the temporal flow of commands and data.

In case of this embodiment, the VTR 9 currently reproduces data on the digital monitor 22.

First, the controller 11 outputs a tuner-setting command 14 to the tuner 7. The tuner 7 receives the command to set the tuner 7. For example, the channel of a television program, etc. is selected. When setting of the tuner 7 is completed, the controller 11 outputs a video-recording-setting command 15 to the HDD 8. Then, when setting of a video-recording-setting command 803 is completed by the HDD 8, the controller outputs a video-recording start command 16 to the HDD 8. Though the HDD 8 sends a video-recording start command to the VTR 9 in the case of the first embodiment, a video-recording start command cannot be sent at this point of time in the case of the second embodiment because the VTR 9 currently reproduces data. First, the HDD 8 starts video-recording the data supplied from the tuner. Data is consecutively recorded from video-recorded AV data-#1 17 to video-recorded AV data-#N 18. In this case, N is a natural number. The controller 11 outputs a reproduction stop command 27 to the VTR 9. The VTR 9 receives the command to stop reproduction on the digital monitor 22 at reproduced AV data-#K 26. In this case, K is a natural number. During the above period as well, the HDD 8 records the video-recorded AV data supplied from the tuner 7. Then, the HDD 8 outputs a video-recording start command 21 to the VTR 9. As described for the first embodiment, the VTR 9 starts recording the video-recorded data-#1 23 from the HDD 8 after the delay due to a mechanical operation. While, the HDD 8 currently video-records the data supplied from the tuner 7 and currently records data in the VTR 9. When the HDD 8 receives the video-recorded AV data #N, the controller outputs a tuner-setting command 19 to the tuner 7. In this case, N is a natural number. For example, the power supply of the tuner is turned off or the like. Then, the controller 11 outputs a video-recording stop command 20 to the HDD 8. Then, the HDD 8 continues writing data into the VTR 9. When the HDD 8 writes into the VTR 9 the video-recorded AV data through #N 24 that is the final data, it completes recording. Thereafter, the HDD 8 transmits a video-recording stop command to the VTR 9.

Then, the processing performed by the HDD 8 to execute the above contents will be described below by referring to a flow chart. Because the processing of the video-recording-setting command 15 is the same as described for the first embodiment, the processing between the video-recording start command 16 and the video-recording stop command 25 will be described below.

In Figure 6, when the HDD 8 receives the video-recording start command 16 sent from the controller 11, it decides whether a video-recording stop command is received (S601). In case of this embodiment, because the video-recording start command 16 is used, the processing shifts to "Input AV data from tuner 7 and record data" (S605). In this case, data is input from the tuner 7 and recorded. When recording of data for one block is completed, the processing shifts to "Is storage unit ready for video-recording?" (S606). In case of this embodiment, the VTR 9 is used as a recorder and reproduction is currently in progress and thereby, no data can be recorded. Therefore, the processing shifts to "Is video-recording stop command received?" (S601). Until the controller 11 outputs the reproduction stop command 27, the HDD 8 continuously records data one block by one block in the step of "Input and record AV data" (S605). When the controller 11 outputs the reproduction stop command 27, the processing shifts to "Is video-recording start command unissued?" (S607) from "Is storage unit ready for video-recording?" (S606). In case of this embodiment, a video-recording start command is not issued to the VTR 9 yet. Therefore, the processing shifts to "Output video-recording start command" (S608). At this point, the HDD 8 outputs a video-recording start command to the VTR 9. The VTR 9 receives the command to start the preparation for recording data but it cannot become immediately ready for video-recording data due to a mechanical delay. Next, in the step of "Is storage unit ready for writing?" (S609), it is decided whether the VTR 9 is actually ready to write data. However, because the VTR 9 is not actually ready to write data yet due to the mechanical delay, the processing shifts to "Is video-recording stop command received?" (S601). At this point, it is assumed that a video-recording stop command is not received from the controller 11. Then, the processing shifts to "Input and record AV data" (S605) to record the data for one block in the HDD 8. The step shifts to "Is storage unit ready for video-recording?" (S606) again and the VTR 9 is ready to record data. Therefore, the processing shifts to "Is video-recording start command unissued?" (S607). Because a video-recording start command is already issued to the VTR 9 last time, the processing shifts to "Is storage unit ready for writing?" (S609) differently from the last time. However, because a write enable state is not set yet due to the mechanical delay of the VTR 9, the processing shifts to "Its video-recording stop command received?" (S601). The above steps are repeated and thereby, data is recorded in the HDD 8. When the VTR 9 actually becomes ready for writing after a predetermined time passes, the processing shifts to "Reproduce and output AV data" (S610) from "Is storage unit ready for writing?" (S609) and the data recorded in the HDD 8 are consecutively recorded in the VTR 9 starting with the first data one block by one block. The same processings are subsequently continued and thereby, data is written into the VTR 9. Then, when a video-recording stop command is received from the controller 11, the processing shifts to "Is not-output AV data present?" (S602) from "Is video-recording stop command received?" (S601). However, because not-output data still remains, data is written into the VTR 9 for one block from the HDD 8 in the step of "Reproduce and output AV data (S603). The above steps are repeated until not-output data runs out. When not-output data runs out in the step of "Is not-output data present?" (S602), the processing shifts to "Output video-recording stop command (S604). At this point, a video-recording stop command is sent to the VTR 9 from the HDD 8 and the processing is completed.

Thus, according to this embodiment, it is possible to instantaneously record data by using the HDD 8 as a temporary memory even while the VTR 9 reproduces data.

### 〈〈Embodiment 3〉〉

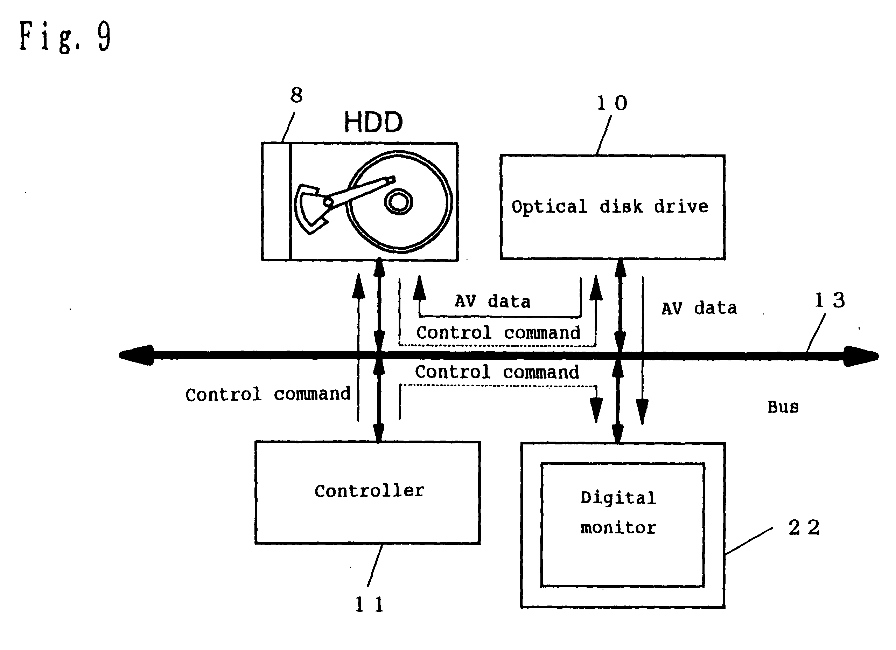

Then, the third embodiment will be described below by referring to Figures 9 to 12 and Figure 18.

For this embodiment, a case is described in which an HDD 8 operates as a temporary memory when reproducing the data supplied from a VTR on a digital monitor as shown in Figure 9.

The audiovisual-data recording/reproducing apparatus of this embodiment is the same as that of the first embodiment. Moreover, the configuration of each audiovisual unit connected on a bus is the same as that in the second embodiment except that the VTR 9 is replaced with an optical disk drive 10 and the tuner 7 is disused. That is, the apparatus is configured by a controller 11, an HDD 8, the optical disk drive 10, and a digital monitor 22.

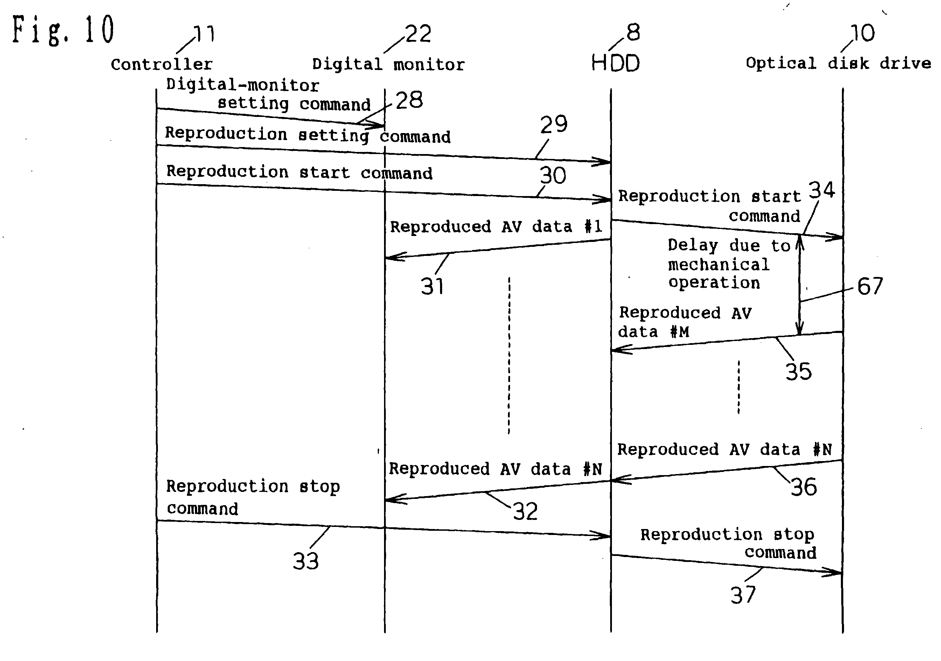

Figure 10 shows the temporal flow of commands and data.

First, the controller 11 outputs a digital-monitor-setting command 28 to the digital monitor 22. For example, it is considered to adjust the sound volume of the digital monitor. Then, a reproduction setting command 29 is output to the HDD 8. Moreover, the controller 11 outputs a reproduction start command 30 to the HDD 8. Then, the HDD 8 outputs a reproduction start command 34 to the optical disk drive 10. Until the optical disk drive becomes ready for reproduction, a delay 67 due to a mechanical operation is present. Therefore, reproduced AV data-#1 31 recorded in the HDD 8 is sent to the digital monitor 22 immediately after the HDD 8 receives the reproduction start command 30. The reproduced AV data recorded in the HDD 8 is the data recorded as cache data in accordance with set temporary-storage-controlling information. When a predetermined time passes, the delay 67 due to the mechanical operation is eliminated, and the optical disk drive 10 becomes ready for reproduction, reproduced AV data-#M 35 is sent to the HDD 8. In this case, M is a natural number and represents that it is Mth-block data. Hereafter, reproduced AV data is sent to the HDD 8 from the optical disk drive 10 and temporarily stored and thereafter, moreover sent to the digital monitor 22 from the HDD 8 and reproduced. When the controller 11 outputs a reproduction stop command 33 to the HDD 8, the HDD 8 further outputs a reproduction stop command 37 to the optical disk drive 10. Then, reproduced AV data-#N 36 which is the final data is sent to the HDD 8, moreover reproduced AV data-#N 32 supplied from the HDD 8 is reproduced on the digital monitor 22, and reproduction is stopped. In this case, N is a natural number larger than M.

Next, the processing performed by the HDD 8 to execute the above contents will be described below in accordance with a flow chart. For convenience' sake, the processing of the reproduction setting command 29 and the subsequent processing will be described in accordance with two separate flow charts.

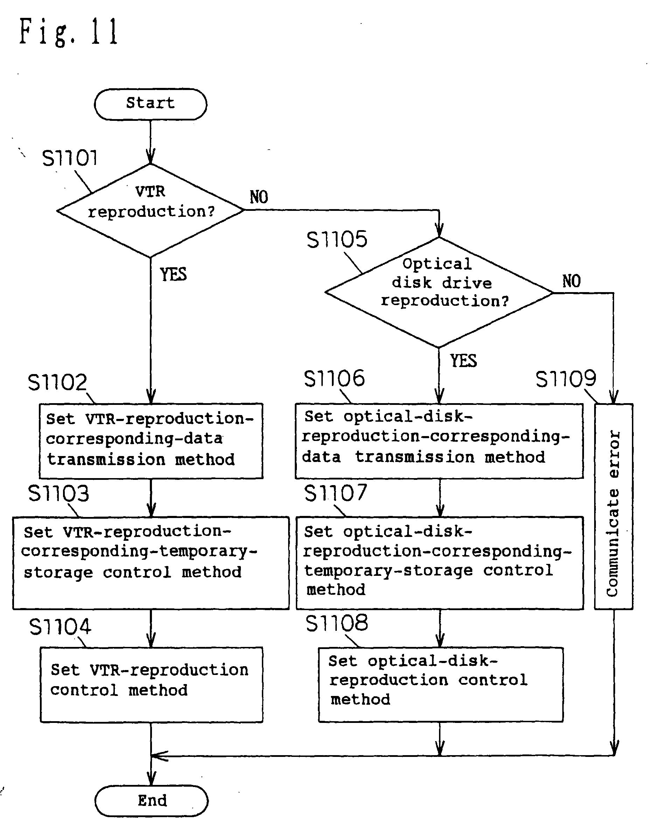

First, the processing performed by the HDD 8 when the reproduction setting command 29 is output to the HDD 8 from the controller 11 is described by referring to Figure 11.

First, the type of storage unit to be reproduced and set is decided. That is, it is decided whether to reproduce the VTR 9 in the step of "Is VTR reproduced?" (S1101). In case of this embodiment, the optical disk drive 10 is reproduced. Therefore, the processing shifts to "Is optical disk reproduced?" (S1105). Moreover, a data transmission method is set in the step of setting an optical-disk-reproduction-corresponding-data transmission method (S1106). Then, a control method for using the HDD 8 as the temporary memory of an optical disk drive is set in the step of setting an optical-disk-reproduction-corresponding-temporary-storage control method (S1107). Moreover, a method for the HDD 8 to control reproduction of the optical disk drive 10 is set in the step of setting an optical-disk reproduction control method (S1108). The above processing represents that the information in a memory 59 is set to a register-1 60 by the setting means 63 in Figure 18.

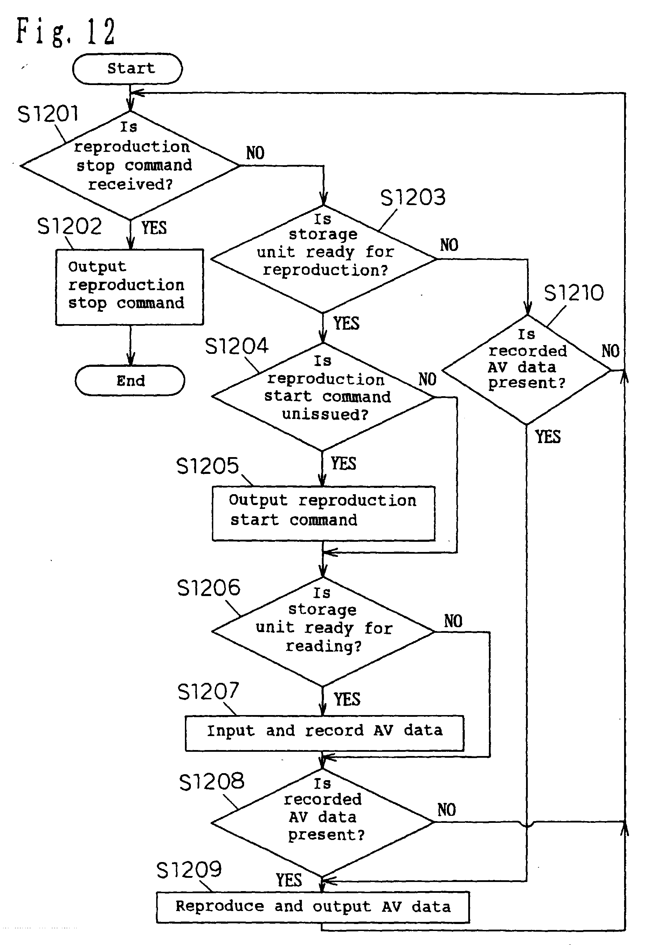

Then, the processing after the reproduction setting command 29 is output will be described below by referring to Figure 12.

First, the reproduction start command 30 is output to the HDD 8 from the controller 11. Then, the processing of the HDD 8 shifts to "Is reproduction stop command received?" (S1201). Because the HDD 8 receives the reproduction start command 30, the processing shifts to "Is storage unit ready for reproduction?" (S1203). In the case of this embodiment, it is assumed that the optical disk drive 10 is used as a storage unit and other data is not currently recorded or reproduced. Then, because the storage unit is ready for reproduction, the processing shifts to "Is reproduction start command unissued?" (S1204). The HDD 8 does not output a reproduction start command to the optical disk drive 10 yet. Therefore, the processing shifts to "Output reproduction start command" (S1205) and the reproduction start command 30 is output to the optical disk drive 10 from the HDD 8. Moreover, the processing shifts to "Is storage unit ready for read?" (S1206). Because of a delay due to a mechanical operation, a state for actually reading data from the optical disk drive 10 is not set yet. Therefore, the step shifts to "Is recorded AV data present?" (S1208). In case of this embodiment, it is assumed that recorded data is present in the HDD 8. The processing shifts to "Reproduce and output AV data" (S1209) to reproduce the AV data of the HDD 8 only for one block and output the data to the digital monitor 22. The processing returns to "Is reproduction stop command received?" (S1201) again but the reproduction stop command 33 is not received from the controller 11 yet. The processing shifts to "Is storage unit ready for reproduction?" (S1203). Similarly to the case of the last time, because the optical disk drive 10 does not currently perform video-recording, the processing shifts to "Is reproduction start command unissued?" (S1204). Because the reproduction start command 34 is already output to the optical disk drive 10 from the HDD 8 last time, the processing shifts to "Is storage unit ready for read?" (S1206). However, because of a delay due to a mechanical operation, state for actually reading data from the optical disk drive 10 into the HDD 8 is not set yet. Therefore, the processing shifts to "Is recorded AV data present?" (S1208). In this case, it is assumed that recorded data is present in the HDD 8 similarly to the case of the last time. The processing shifts to "Reproduce and output AV data" (S1209) to reproduce the AV data of the HDD 8 only for one block and output the data to the digital monitor 22. The processing shifts to "Is reproduction stop command received?" (S1201). When a predetermined time passes, the delay due to the mechanical operation is eliminated, and a state capable of reading data from the optical disk drive 10 is set, the processing shifts to "Input and record AV data" (S1207) from "Is storage unit ready for read?" (S1206). Data is read from the optical disk drive 10 into the HDD 8 only for one block and recorded. Moreover, the processing shifts to "Is recorded data present?" (S1208). Because recorded data is present in the HDD 8, the processing shifts to "Reproduce and output AV data. The data for one block is reproduced by the HDD 8 and output to the digital monitor 22. The above processings are repeatedly performed. When the reproduction stop command 33 is output to the HDD 8 from the controller 11, the processing shifts to "Output reproduction stop command" (S1202) from "Is reproduction stop command received?" (S1201). The reproduction stop command 37 is output to the optical disk drive 10 from the HDD 8 and reproduction of the optical disk drive 10 stops.

As described above, this embodiment enables instantaneous reproduction by using the HDD 8 as a temporary memory though the optical disk drive 10 has a mechanical-operation delay.

### 〈〈Embodiment 4〉〉

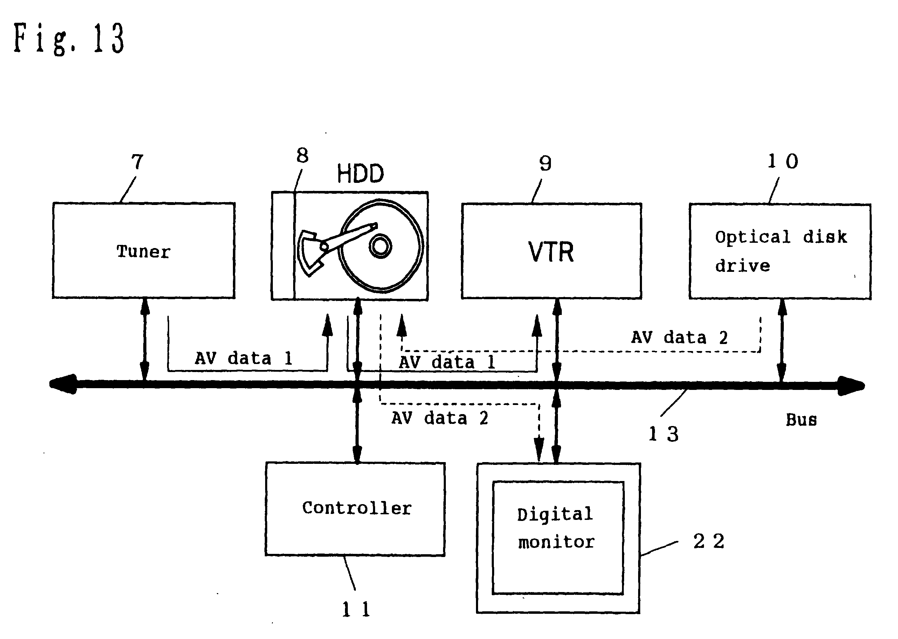

Then, the fourth embodiment will be described below by referring to Figures 13, 17, and 18.

For this embodiment, as shown by Fig. 13, a case is described in which an HDD 8 operates as temporary memories of two storage units.

The audiovisual-data recording/reproducing apparatus of this embodiment is the same as that of the first embodiment. Moreover, each audiovisual unit connected on a bus includes a controller 11, a tuner 7, an HDD 8, a VTR 9, an optical disk drive 10, and a digital monitor 22. The HDD 8 serves as the audiovisual-data recording/reproducing apparatus of this embodiment.

As shown in Figure 18, this embodiment sets the storage information stored in a memory 59 to a register-1 60 and a register-2 61 by setting means 63. Processing means 65 performs multitask processing by referring to the information stored in the register-1 60 and register-2 61. As described above, example of the memory 59, register-1 60 and register-2 61 are shown in Figure 17.

This embodiment is able to perform the processings described for the embodiments 1 to 3 at the same time. That is, the HDD 8 can simultaneously operate as temporary memories of the VTR 9 and the optical disk drive 10 and therefore, various types of temporary storage are possible.

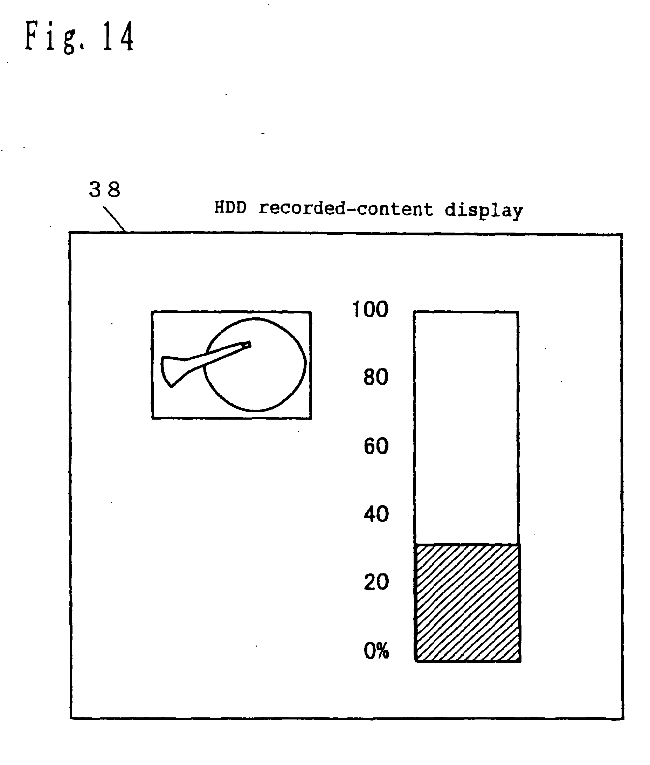

Then, the fifth embodiment will be described below by referring to Figures 14, 15, and 18.

The configuration of an HDD 8 is the same as the case of the first embodiment except the following portions. That is, as shown in Figure 18, the different points are that an HDD control circuit 5 is provided with recording-state display means 64 and storage-state display means 66.

The recording-state display means 64 is a panel for displaying a recording state of the HDD 8. Moreover, the storage-unit-state display means 66 is a panel for displaying a state of a storage unit such as a VTR or optical disk drive.

Figure 14 shows an example of the recording-state display means 64. A user is able to know how much the capacity of the HDD 8 remains by seeing the panel 38.

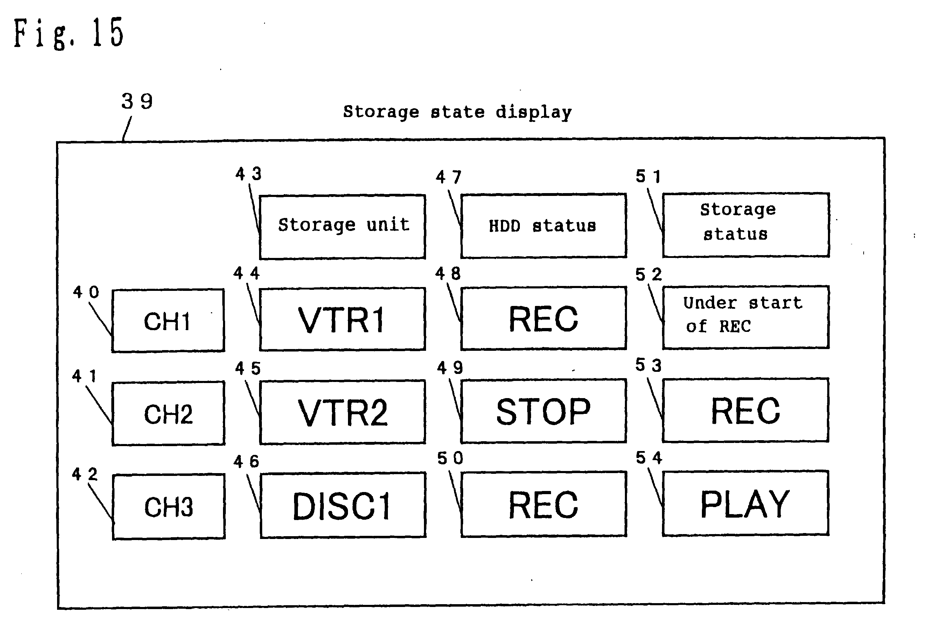

Moreover, Figure 15 shows an example of the storage-state display means 66.

As a storage unit 43, a VTR1 44, a VTR2 45, and a DISC1 46 are set to a CH1 40, a CH2 41, and a CH3 42, respectively. This represents that information is set to the register-1 60, register-2 61, and register-3 62 respectively. In case of the VTR1 set to the CH1 40, an HDD status 47 is a REC-48 state at present. Moreover, a storage status 51 is under-starting-of-REC 52. This shows that an HDD records data and the VTR1 44 is not a recording state yet because of a delay due to a mechanical operation. In case of the VTR2 45 set to the CH2 41, an HDD status is STOP 49 and a storage status 51 is REC 53. This shows that an HDD already completes recording of data and the data recorded by the HDD is reproduced to record the data in the VTR2 45. Moreover, in case of the DISC1 set to the CH3 42, an HDD status 47 is REC 50 and a storage status 51 is PLAY 54. This shows that the DISC1 46 currently performs reproduction and an HDD currently records other data to record in the DISC1 46. Thus, because an HDD performs various types of temporary storage, a user is able to easily know the present state between units by seeing the storage-state display means 66.

Data storage means of the present invention can use not only the magnetic disk drive used for each of the above embodiments but also any data storage means such as a high-speed optical disk drive as long as the data storage means has less overhead of a mechanical operation.

Moreover, the number of registers of the present invention is not restricted to three used for each of the above embodiments. It is also possible to use any number of registers such as 1, 2, or 4 or more as long as the number of registers is suitable for the number of storage units to be controlled by an HDD.

Furthermore, storage-unit display means of the present invention is not restricted to have three CHs (channels) used for each of the above embodiments. It is possible to have 1, 2, or 4 channels or more as long as the number of channels is suitable for the number of storage units to be controlled by an HDD.

Furthermore, a storage unit of the present invention is not restricted to the VTR or optical disk drive used for the above embodiments. It is possible to use any unit such as a DAT unit or changer unit as long as the unit has a mechanical-operation overhead that can be connected on a bus.

Furthermore, the present invention is a medium storing a program for realizing all or some of functions of means for realizing the functions.

### Industrial Applicability

As described above, the present invention makes it possible to provide an audiovisual-data recording/reproducing apparatus requiring less cost, superior in availability efficiency, and capable of corresponding to various temporary-storage methods.

## Claims

1. An audiovisual-data recording/reproducing apparatus comprising:
interface means for transferring data and commands to and from at least a controller and storage units connected on a bus;
data recording means for transferring data to and from the interface means and recording or reproducing the data; recording/reproducing-position control means for controlling the recording/reproducing position of the data recording means; and
recording/reproducing control means for transferring commands to and from the interface means, controlling the data recording means and the recording/reproducing-position control means, and executing the data temporary-storage operation; characterized in that
the recording/reproducing control means has at least the information showing types of the storage units, information for receiving commands corresponding to the types of the storage units, information for inputting/outputting data, information for controlling temporary storage, information for controlling data write in the types of the storage units, and information for controlling data read from the types of the storage units, and
the type of a storage unit serving as a temporary memory is specified in accordance with the command output from the controller showing a storage unit serving as a temporary memory to perform control in accordance with the command-receiving information, data-inputting/outputting information, temporary-storage-controlling information, data-write-controlling information, and data-read-controlling information corresponding to specified types of storage units.

2. The audiovisual-data recording/reproducing apparatus according to claim 1, characterized in that the recording/reproducing control means stores not only the various types of information but also stores correspondence information between the command-receiving information, data-inputting/outputting information, temporary-storage-controlling information, data-write-controlling information, data-read-controlling information, and the type of data to be recorded or reproduced.

3. The audiovisual-data recording/reproducing apparatus according to claim 1 or 2, characterized in that the recording/reproducing control means is provided with setting means for setting the command-receiving information, data-inputting/outputting information, temporary-storage-controlling information, data-write-controlling information, and data-read-controlling information for the type of storage unit corresponding to the command received from the controller, to a predetermined register, and processing means for performing the control in accordance with the contents of the register.

4. The audiovisual-data recording/reproducing apparatus according to claim 3, characterized in that a plurality of the registers are used and the processing means performs multitask processing.

5. The audiovisual-data recording/reproducing apparatus according to any one of claims 1 to 3, characterized in that the recording/reproducing control means has recording-state display means for displaying the recording state of the data storage means.

6. The audiovisual-data recording/reproducing apparatus according to any one of claims 1 to 3, characterized in that the recording/reproducing control means has storage-unit-state display means for displaying the state of a storage unit instructed by the controller.

7. A medium storing a program for realizing all or some of the functions of the means of claims 1 to 6.
